**Europäisches Patentamt**

**European Patent Office**

**Office européen des brevets**

(19)

(11) Veröffentlichungsnummer: **0 171 838**
**B1**

(12) # EUROPÄISCHE PATENTSCHRIFT

(45) Veröffentlichungstag der Patentschrift:
**05.10.88**

(21) Anmeldenummer: **85201111.3**

(22) Anmeldetag: **08.07.85**

(51) Int. Cl.⁴: **H 01 G 1/02,** H 01 C 1/028,
H 01 C 1/014

(54) Umhülltes elektrisches Element.

(30) Priorität: **17.07.84 NL 8402251**

(43) Veröffentlichungstag der Anmeldung:
**19.02.86 Patentblatt 86/8**

(45) Bekanntmachung des Hinweises auf die Patenterteilung:
**05.10.88 Patentblatt 88/40**

(84) Benannte Vertragsstaaten:
**BE DE FR GB IT SE**

(56) Entgegenhaltungen:
**EP - A - 0 130 386**
**WO - A - 85/00463**
**FR - A - 1 185 331**
**GB - A - 2 125 623**
**US - A - 4 205 365**
**US - A - 4 417 298**

(73) Patentinhaber: **N.V. Philips' Gloeilampenfabrieken,
Groenewoudseweg 1, NL-5621 BA Eindhoven (NL)**

(72) Erfinder: **Voeten, Hendrik, INT. OCTROOIBUREAU B.V.
Prof. Holstlaan 6, NL-5656 AA Eindhoven (NL)**

(74) Vertreter: **Auwerda, Cornelis Petrus et al,
INTERNATIONAAL OCTROOIBUREAU B.V. Prof.
Holstlaan 6, NL-5656 AA Eindhoven (NL)**

## Beschreibung

Die Erfindung bezieht sich auf ein umhülltes elektrisches Element mit Kontaktflächen an den Enden einer der Begrenzungsflächen der Umhüllung.

Aus der US Patentschrift 4 417 298 ist ein derartiges umhülltes Element bekannt. Ein Element, das mit Kontaktflächen an den Enden einer der Begrenzungsflächen statt mit den bisher üblichen Kontaktdrähten versehen ist, ist namentlich zur Montage auf Platten mit gedruckter Verdrahtung viel geeigneter. Insbesondere für die automatisierte Befestigung eignet sich dieses sogenannte chip-förmige Element besonders.

Nach dieser Patentschrift ist das elektrische Element mit einer Griessmasse in einer prismaförmigen auf einer Seite offenen Umhüllung aus elektrisch isolierendem Material eingebaut und es befinden sich an den Enden einer der Begrenzungsflächen der Umhüllung Kontaktierungsflächen, die mit den Enden bzw. den Elektroden des Elements leitend verbunden sind.

Der konstruktive Aufbau des umhüllten Elementes weist eine prismaförmige Umhüllung auf, die aus einem elektrisch isolierenden Kunststoff besteht. Auf zwei einander gegenüber liegenden Flächen der Umhüllung werden Metallverkleidungen befestigt, die aus einem gut lötbaren Metall bestehen. Diese Metallverkleidungen werden mit den Kontakten des Elementes leiten verbunden, die entweder die Form eines Zuführungsdrahtes haben, der über einen Schlitz in der Umhüllung mit der darauf angebrachten Metallverkleidung hinausgeführt und dort mit einer Metallverkleidung verlötet wird, oder, wenn es sich um eine Kontaktfläche handelt, durch eine Bügel, der einerseits an der Kontaktfläche des Elementes leitend befestigt wird und andererseits über den Rand oder über einen Schlitz der Umhüllung mit der anderen Metallverkelidung auf der Aussenseite der auf einer oder zwei Seiten offenen Umhüllung befestigt wird. Danach wird das Element eingegossen mit einem Kunstharz derselben Zusammensetzung wie die der Umhüllung oder mit einem Kunstharz, der mit Rücksicht auf den Ausdehnungskoeffizienten und die Haftung dazu passt. Die Metallverkleidungen an einander gegenüber liegenden Flächen können bis jenseits der Unterseite und über einen Teil der unteren Fläche sich weiter erstrecken. Auf diese Weise befinden sie sich an den Enden nur einer Begrenzungsfläche des umhüllten Elementes, das sich auf diese Weise durchaus zur automatisierten Montage auf einer Platte mit gedruckter Verdrahtung eignet.

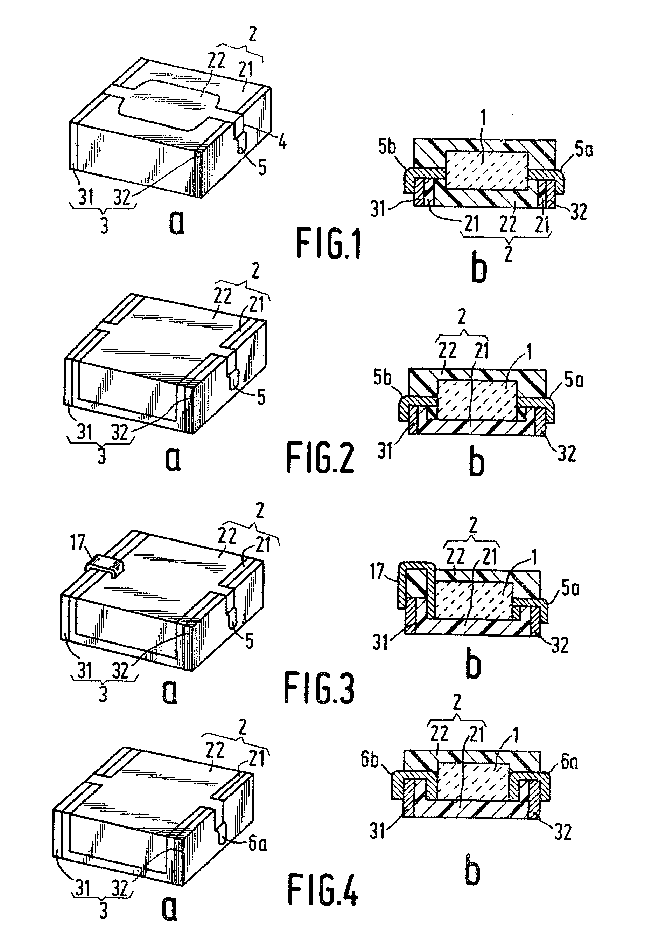

In Fig. 1 bis 4a und b ist dieser bekannte Aufbau dargestelle, jeweils schaubildlich und im Schnitt. Darin ist 1 ein Element, 21 die Umhüllung, 22 die Giessmasse, 31 und 32 die Metallverkleidungen, 5 der abgewinkelte Zuführungsdraht, 6 ein Durchführungsbügel über einen Schlitz und 17 auch ein Durchführungsbügel über den Rand.

Dieser bekannte Aufbau ist relativ kompliziert und verhältnismässig arbeitsintensiv in der Herstellung. Die Schlitze sind zum Eingiessen ziemlich unbequem.

Die Erfindung schafft nun eine Ausführungsform, die wesentlich einfacher ist und in der Herstellung viel weniger arbeitsintensiv.

Ein umhülltes elektrisches Element, das mit einer elektrisch isolierenden Giessmasse in einer prismaförmigen mindestens auf einer Seite offenen Umhüllung aus elektrisch isolierendem Material eingebaut und mit an den Enden von Begrenzungsflächen dieser Umhüllung befindlichen Kontaktierungsflächen versehen ist, die mit den Kontakten des Elementes leitend verbunden sind, weist nach der Erfindung das Kennzeichen auf, dass jede Kontaktierungsfläche einen Teil eines Streifens leitenden Materials bildet, der aus der Begrenzungsfläche längs der Aussenseite der Umhüllung und daraufhin einwärts abgewinkelt ist, wobei zwischen den Teilen auf der Innenseite das Element elektrisch leitend befestigt ist.

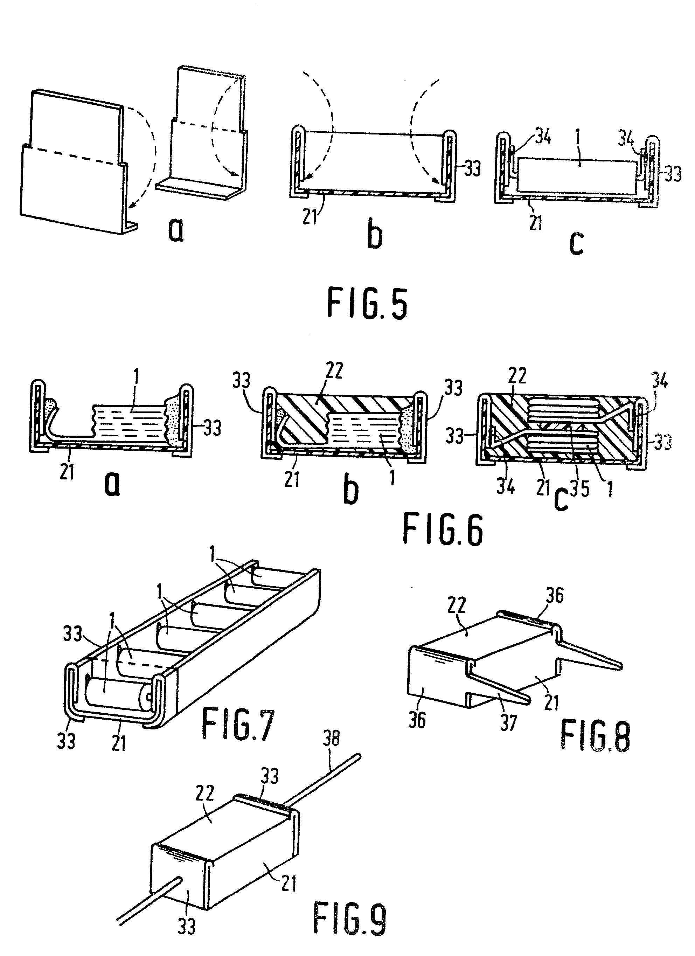

Die Erfindung wird anhand der Fig. 5 bis 7 näher erläutert.

Fig. 5a zeigt den Metallstreifen (33) und die Richtung, in der dieser um die Seite einer Umhüllung (21) abgewinkelt wird, so dass die Situation nach Fig. 5b) erhalten wird. Zwischen den Teilen der Metallstreifen (33) innerhalb der Umhüllung (21) wird das Element (1) angeordnet und die Zuführungsdrähte, gegebenenfalls nach dem Zuschneiden, mit Hilfe von Löt- oder einer elektrisch leitenden Paste (34) oder durch Schweissen befestigt.

Fig. 6a und b) zeigen eine erfindungsgemässe umhüllte Ausführungsform eine trockenen Elektrolytkondensators (1) mit einem Anodenkörper aus einem gefalteten Aluminiumstreifen. Diese Ausführungsform ist in der US-Patentschrift 3 819 340 beschrieben. In Fig. 6b) ist das Ganze in der Umhüllung 21 und mit den Kontaktstreifen 33 mit Füllmasse 22 gefüllt. Die Umhüllung besteht in einer bevorzugten Ausführungsform aus glasfasergefülltem Polyester, das gegen Löten beständig ist, d.h. dass dieses Material während 10 Sekunden einer Temperatur von 270 °C ohne Schaden muss ausgesetzt werden können. Die Füllmasse besteht vorzugsweise aus Epoxyharz. In einer anderen vorteilhaften Ausführungsform besteht die Füllmasse aus einem durch UV-Bestrahlung aushärtbaren Lack im ausgehärteten Zustand.

Fig. 6c) zeigt eine bipolare Ausführungsform zweier mit den Kathodenseiten miteinander verbundener trockner Aluminiumkondensatoren aus einem gefalteten Streifen. Die Anodenenden und die zwei Kathodenseiten sind mit Hilfe von leitendem Epoxyharz 34 bzw. 35, beispielsweise gefüllt mit Nickelpulver, mit den Kontaktflächen 33 bzw. miteinander verbunden.

Auch ist es möglich, dazu einen leitend gemachten, durch UV-Bestrahlung ausgehärteten Lack zu verwenden.

In Fig. 7 ist dargestellt, wie vorzugsweise die umhüllten Teile nach der Erfindung hergestellt werden. In einer wannenförmigen Sammelumhüllung (21) werden die Teile (1) in einem geeigneten gegenseitigen Abstand zwischen den zwei Streifenenden elektrisch befestigt. Der Streifen 33 hat eine derartige Form, dass dieser über die ganze Länge der Sammelumhüllung liegt. Nach dem Befestigen der Teile und dem Füllen der Umhüllung mit Giessmasse werden die jeweiligen umhüllten Teile entsprechend den Linien x–x aus dem erhaltenen Stab gesägt.

Nun kann es manchmal nützlich sein, aus den erfindungsgemäss umhüllten Elementen dennoch wieder mit Anschlussdrähten oder -streifen versehene Elemente herzustellen, weil diese Form sich leichter handhaben lässt als das ursprüngliche Drahtelement.

Die Fig. 8 und 9 zeigen derartige Abwandlungen. Nach der Fig. 8 ist der Streifen leitenden Materials 36, der längs der kurzen Seiten der Umhüllung 21 gefaltet ist, mit Vorsprüngen 37 versehen, die zur Kontaktierung verwendet werden.

In Fig. 9 sind an den Streifen leitenden Materials 33, die längs der kurzen Seiten der Umhüllung 21 einwärts gefaltet sind, Anschlussdrähte 38 festgeschweisst.

## Patentansprüche

1. Umhülltes elektrisches Element, das mit einer elektrisch isolierenden Giessmasse in einer prismaförmigen mindestens auf einer Seite offenen Umhüllung aus elektrisch isolierendem Material eingebaut und mit an den Enden von Begrenzungsflächen dieser Umhüllung befindlichen Kontaktierungsflächen versehen ist, die mit den Kontakten des Elementes leitend verbunden sind, dadurch gekennzeichnet, dass jede Kontaktierungsfläche einen Teil eines Streifens leitenden Materials bildet, der aus der Begrenzungsfläche längs der Aussenseite der Umhüllung und daraufhin einwärts gefaltet ist, wobei zwischen den Teilen auf der Innenseite, das Element elektrisch leitend befestigt ist.

2. Umhülltes Element nach Anspruch 1, dadurch gekennzeichnet, dass die Umhüllung aus glasfasergefülltem Polyester und die Giessmasse aus einem Epoxyharz besteht.

3. Umhülltes Element nach Anspruch 1, dadurch gekennzeichnet, dass die Giessmasse aus einem durch UV-Bestrahlung ausgehärteten Lack besteht.

4. Umhülltes Element nach Anspruch 1 oder 2, dadurch gekennzeichnet, dass die Anschlusskontakte des Elementes mit Hilfe eines Lötmittels auf den Innenseite des Streifens leitenden Materials befestigt sind.

5. Umhülltes Element nach Anspruch 1 oder 2, dadurch gekennzeichnet, dass die Anschlusskontakte des Elementes mit Hilfe eines elektrisch leitenden Epoxyharzes auf der Innenseite des Streifens leitenden Materials befestigt sind.

6. Umhülltes Element nach einem der Ansprüche 1 bis 3, dadurch gekennzeichnet, dass die Anschlusskontakte des Elementes mit Hilfe eines Leitend gemachten, durch UV-Bestrahlung ausgehärteten Lacks auf der Innenseite des Streifens leitendes Materials befestigt sind.

7. Umhülltes Element nach einem der vorstehenden Ansprüche, dadurch gekennzeichnet, dass die aus dem Streifen leitenden Materials bestehenden Kontaktierungsflächen mit Anschlussdrähten oder -streifen versehen sind.

## Revendications

1. Composant électrique enveloppé qui est incorporé avec une masse de moulage électro-isolante dans une enveloppe prismatique en matériau électro-isolant qui est ouverte au moins d'un côté et qui est munie de faces de contact disposée aux extrémités de faces de délimitation de cette enveloppe et connectées de façon conductrice aux contacts du composant est caractérisé, conformément à l'invention en ce que chaque face de contact fait partie d'une bande en matériau conducteur qui est pliée à partir de la face de délimitation le long de la face extérieure de l'enveloppe et ensuite vers l'intérieur, alors qu'entre ces parties l'élément est fixé d'une façon électroconductrice sur la face intérieure.

2. Composant enveloppé selon la revendication 1, caractérisé en ce que l'enveloppe est constituée par du polyester rempli de fibres de verre et la masse de moulage est consituée par une résine époxy.

3. Composant endeloppé selon la revendication 1, caractérisé en ce que la masse de moulage est consituée par un vernis durci à l'aide de rayonnement ultraviolet.

4. Composant enveloppé selon la revendication 1 ou 2, caractérisé en ce que les contacts de connexion du composant sont fixés à l'aide d'un moyen de soudage sur la face intérieure de la bande de matériau conducteur.

5. Composant enveloppé selon la revendication 1 ou 2, caractérisé en ce que les contacts de connexion du composant sont fixés à l'aide d'une résine époxy électroconductrice sur la face intérieure de la bande de matériau conducteur.

6. Composant enveloppé selon l'une des revendications 1 à 3, caractérisé en ce que les contacts de connexion du composant sont fixés à l'aide d'un vernis durci à l'aide de rayonnement ultraviolet rendu conducteur sur la face intérieure de la bande de matériau conducteur.

7. Composant enveloppé selon l'une des revendications précédentes, caractérisé en ce que les faces de contact constituées par des bandes de matériau conducteur sont munies de fils ou de bandes de connexion.

## Claims

1. An enveloped electric component which is built into a prismatic envelope, using an electrically insulating moulding compound, which envelope is made of an electrically insulating material, is open on at least one side, and has contact faces at the ends of its boundary surfaces, which contact faces are conductively connected to the contacts of the component, characterized in that each contact face forms part of a strip of conductive material which extends from the boundary surface along the outside of the envelope and which is then folded inwards, the component being electrically conductively secured on the inside between the parts.

2. An enveloped component as claimed in Claim 1, characterized in that the envelope is a polyester filled with glass fibre and the moulding compound is an epoxy resin.

3. An enveloped component as claimed in Claim 1, characterized in that the moulding compound is an UV-cured lacquer.

4. An enveloped component as claimed in Claim 1 or 2, characterized in that the terminals of the component are secured to the inside of the strip of conductive material by means of solder.

5. An enveloped component as claimed in Claim 1 or 2, characterized in that the terminals of the component are secured to the inside of the strip of conductive material by means of an electrically conductive epoxy resin.

6. An enveloped component as claimed in one of the Claims 1 to 3, characterized in that the terminals of the component are secured to the inside of the strip of conductive material by means of a lacquer which has been rendered conductive and which has been cured by means of UV-radiation.

7. An enveloped component as claimed in one of the preceding claims, characterized in that the contact faces which consist of the strips of conductive material are provided with connecting leads or connecting strips.

0 171 838

1/2

FIG.1

FIG.2

FIG.3

FIG.4

5

0 171 838

2/2

FIG.5

FIG.6

FIG.7

FIG.8

FIG.9

7